(19) Europäisches Patentamt
European Patent Office
Office européen des brevets

(11) EP 1 216 438 B1

(12) **EUROPEAN PATENT SPECIFICATION**

(45) Date of publication and mention of the grant of the patent:
**28.11.2007 Bulletin 2007/48**

(21) Application number: **00963569.9**

(22) Date of filing: **18.09.2000**

(51) Int Cl.:
***G05B 13/00*** *(2006.01)* ***B62D 5/04*** *(2006.01)*

(86) International application number:
**PCT/US2000/025521**

(87) International publication number:
**WO 2001/020412 (22.03.2001 Gazette 2001/12)**

(54) **END-OF-TRAVEL IMPACT MANAGEMENT SYSTEM**

SYSTEM ZUR VERWALTUNG DES ENDPUNKTSCHLAGES

SYSTEME DE GESTION DU CHOC DE FIN DE COURSE

(84) Designated Contracting States:
**DE FR GB IT**

(30) Priority: **17.09.1999 US 154683 P**
**17.09.1999 US 154612 P**

(43) Date of publication of application:
**26.06.2002 Bulletin 2002/26**

(73) Proprietor: **Delphi Technologies, Inc.**
**Troy, MI 48007-5052 (US)**

(72) Inventor: **TANKE, Eugene, T., II**
**Vassar, MI 48768 (US)**

(74) Representative: **Denton, Michael John**
**Delphi European Headquarters,**
**64 avenue de la Plaine de France,**
**Paris Nord II,**
**BP 60059, Tremblay-en-France**
**95972 Roissy Charles de Gaulle Cédex (FR)**

(56) References cited:

**US-A- 4 660 671**
**US-A- 4 664 211**
**US-A- 4 918 744**
**US-A- 5 267 627**
**US-A- 5 473 539**
**US-A- 5 563 790**
**US-A- 5 602 735**
**US-A- 5 924 518**
**US-A- 5 941 338**

- **PATENT ABSTRACTS OF JAPAN vol. 1997, no. 05, 30 May 1997 (1997-05-30) & JP 09 002315 A (AISIN SEIKI CO LTD), 7 January 1997 (1997-01-07)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

In electric power steering (EPS) systems some of the highest loads acting upon system components occur when -- due to high handwheel rpm and thus high kinetic energy of the system -- the system is brought to an abrupt halt at an end-of-travel stop. Such uncontrolled stops inflict high impact forces upon electrical and mechanical components causing high stress and possible failure thereof. Thus, it is desirable to control the speed (and thus kinetic energy) of the system components over the extent of their travel and at critical points, such as when the system approaches an end-of-travel stop. US 4785901 discloses an electric power steering system with means for attenuating motor torque near end-of-travel positions to avoid damaging the motor. However, the document does not address the problem of end-of-travel impact forces.

SUMMARY OF THE INVENTION

According to the present invention there is provided a system for controlling collisions between elements of an automotive rack and pinion steering apparatus and an end-of-travel stop as claimed in claim 1 and a method as claimed in claim 5.

A system for controlling the collisions between elements of an automotive rack and pinion steering apparatus at an end-of-travel stop is disclosed. The system comprises sensors for sensing a set of variables of the rack and pinion steering apparatus, namely an angular position of a steering wheel (or linear position of the rack), a rate of change thereof, and the angle (or linear distance for the rack) to an end-of-stop. From this information, a modification factor n may be calculated that is multiplied by a power steering torque assist command (TAC) to produce a modified torque assist command (MTAC). This modified command may represent a reduced torque assist or even a negative torque assist as required to prevent the steering system from striking the end-of-stop too hard.

In an alternative embodiment, the dynamic data is used to calculate a torque limit to be imposed upon the torque assist command whenever the steering system is close to an end-of-stop. The two embodiments may also be superimposed.

The invention reduces torque at end-of-travel impacts, and helps preserve the mechanical integrity of the power steering system.

DESCRIPTION OF THE DRAWINGS

Figure 1 is a generalized diagrammatic representation of an automotive rack and pinion steering apparatus in communication with a sensor, a motor drive assembly and a controller.

Figure 2 is a first generalized schematic representation of the signal flow between the automotive rack and pinion steering apparatus and the sensor, the motor drive assembly and the controller of Figure 1.

Figure 3 is a second generalized schematic representation of the signal flow between the automotive rack and pinion steering apparatus and the sensor, the motor drive assembly and the controller of Figure 1.

Figure 4 is a generalized schematic representation of the signal flow the control system.

Figure 5 is a first exemplary graphical representation of the functional relationship between the error signal and a dimensionless number n.

Figure 6 is a second exemplary graphical representation of the functional relationship between the error signal and a dimensionless number n.

Figure 7 is a third exemplary graphical representation of the functional relationship between the error signal and a dimensionless number n.

Figure 8 is a fourth exemplary graphical representation of the functional relationship between the error signal and a dimensionless number n.

Figure 9 is a fifth exemplary graphical representation of the functional relationship between the error signal and a dimensionless number n.

Figure 10 is a sixth exemplary graphical representation of the functional relationship between the error signal and a dimensionless number n.

Figure 11 is a flow chart of the modification factor embodiment disclosed herein.

Figure 12 is a graph showing exemplary assist torque limit curves for three different angular steering positions for the torque limit embodiment.

Figure 13 is a flow diagram representing the algorithm used in the torque limit embodiment.

Figures 14A and 14B show scatter plots of rotations per minute squared versus pinion torque for torque-limit-protected and unprotected systems.

Figure 15 is a flow diagram of an end of torque limit system that does not initially use an actual steering angular position signal.

DETAILED DESCRIPTION OF THE INVENTION

Referring to Figure 1, there is shown a generalized diagrammatic representation of an automotive rack and pinion steering apparatus 100 in communication with a sensor 200, a motor drive assembly 300, and a controller 400. The rack and pinion steering apparatus 100 generally comprises a steering wheel 102 connected to a steering column 104. The steering wheel 102 is subject to clockwise or counterclockwise steering commands from a driver. The steering column 104 is connected to a rack 108 through a pinion gear 106. The rack 108 is connected to one or more roadwheels 112 through a steering linkage 110. The driver thus is able to steer an automobile by directing the position of the roadwheel 112 through the rack and pinion steering apparatus 100.

Referring to Figure 2, a first generalized schematic representation of the signal flow between the automotive rack and pinion steering apparatus 100, the sensor 200, the motor drive assembly 300 and the controller 400 of Figure 1. The rack and pinion steering apparatus 100 is subject to a driver torque, $T_d$, as a result of the driver steering commands; as well as a modified torque assistance, $T_m$, provided by the motor drive assembly 300. The modified torque assistance, $T_m$, is denoted by a heavy arrow to indicate that this connection between the motor drive assembly 300 and the rack and pinion steering apparatus 100 is a mechanical link, rather than a communicative link. The rack and pinion steering apparatus 100 thereby provides roadwheel torque 116 to the roadwheels 112 for steering. The sensor 200 is operative to sense the torque, $T_c$, on the steering column 104 and the angular position, $\theta_c$, of the steering column 104 and to provide measurements thereof to the controller 400. The controller 400 is responsive to $T_c$ and $\theta_c$ and operative thereby to provide as output therefrom a modified torque assist command MTAC. The motor drive assembly 300 is thence responsive to the modified torque assist command and provides the rack and pinion steering apparatus 100 with the aforesaid modified torque assistance, $T_m$.

Referring to Figure 3, there is depicted a second generalized schematic representation of the signal flow between the automotive rack and pinion steering apparatus 100, the sensor 200, the motor drive assembly 300 and the controller 400 of Figure 1. The controller 400 comprises a steering assist subsystem 402 responsive to the torque, $T_c$, on the steering column 104 and the angular steering position, $\theta_c$, and operative thereby to provide as output therefrom a torque assist command TAC and the angular velocity, $d\theta_c/dt = \omega_c$, of the steering column 104. The torque assistance command, TAC, is such that, absent the effect of an impact avoidance system 500, a torque assistance, $T_a$, is provided the driver at the steering column 104. In Figure 3 the impact avoidance system 500 is responsive to the torque assist command TAC, the angular velocity, $\omega_c$, and the angular steering position signal, $\theta_c$, and operative thereby to provide as output therefrom a modified torque assist command, MTAC. The modified torque assist command, MTAC, is conveyed to the motor drive assembly 300 whereupon modified torque assistance, $T_m$, is provided to the driver.

**Impact Avoidance Systems**

Two preferred embodiments of an impact management system are disclosed. The first calculates a modification factor, n, to be multiplied by the torque assist command TAC to provide the modified torque assist command, MTAC. The other embodiment calculates a torque limit. If the torque assist command, TAC, exceeds the torque limit, then the torque assist command is adjusted accordingly so as to produce the MTAC. Both embodiments may be implemented simultaneously on the same system.

**Modification Factor Embodiment**

Reference will now be had to Figures 4 through 11, which refer to the modification factor embodiment of the invention.

Referring to Figure 4, there is depicted a generalized schematic representing the signal flow of the impact avoidance system 500 of the invention. In Figure 4, the angular steering position, $\theta_c$, originating from the sensor 200, is operated on by an absolute value operator 502 producing the absolute value, $|\theta_c|$, of the angular steering position. An end-of-travel set point, $\theta_{eot}$, is provided. The end-of-travel $\theta_{eot}$ point is the value that the angular steering position, $\theta_c$, would be when the rack and pinion steering apparatus 100 has reached end-of-travel. The difference between $|\theta_c|$ and $\theta_{eot}$ is calculated by a summing junction 508 yielding as output therefrom an error signal, E. The error signal, E, is indicative of the angular distance to the end-of-travel. The error signal, E, and the angular velocity, $\omega_c$, are thence provided to a database 512. Based upon the error signal, E, the angular velocity, $\omega_c$, of the steering column 104, and a predefined function, $f_i(E, \theta)$, a number, $n = f_i(E, \theta)$, having a value $-1 \le n \le +1$ is generated as output from the database 512. In the alternative, based upon the angular velocity, $\omega_c$, the database 512 is entered and a table is chosen whereby the number $n = f_j(E)$ such that n has a value $-1 \le n \le +1$. The nature of the $f_j(E)$ is made clear by exemplary functions shown in Figures 5 through 8 of the drawings. Figure 5 is a linear function of E, with a predetermined slope, $m_1$, from the origin to a value of $n_1 = 1$. Figure 6 is a linear function of E, with a predetermined slope, $m_2$, and a predetermined y intercept, $-b_1$, to a value of $n_2 = 1$. Figure 7 is a linear function of E, with a predetermined slope, $m_3$, and a predetermined y intercept, $-b_2$, to a value of $n_3 = 1$, with a deadband, $\Delta E_1$. Figure 8 is a nonlinear function of E increasing from the origin and asymptotically approaching $n_4 = 1$. Figure 9 is a nonlinear function of E increasing from a deadband value, $\Delta E_2$, and asymptotically approaching $n_5 = 1$. Figure 10 is a nonlinear function of E increasing from a y intercept, $-b_3$ and asymptotically approaching $n_6 = 1$, with a deadband value, $\Delta E_3$. In either case, the number n is multiplied in a multiplier 516 (Figure 4) by the torque assist command TAC to provide the modified torque assist command, MTAC, which is then conveyed to the motor drive assembly 300. The nature of the modified torque assist command, MTAC, is such that if $n < 0$, the modified torque, $T_m$, is such as to provide negative, or counter, torque assistance, $T_a$, in some fractional amount, $n \cdot T_a$, and thus aid in avoidance of the aforesaid collision between elements of the rack and pinion steering apparatus 100 and an end-of-travel stop. If n = 0 then the no torque assistance is provided, i.e., $T_a = T_m = 0$. If n > 0 the modified torque, $T_m$, is some positive fractional amount of the aforesaid torque assistance Of course, n=1 indicates that $T_m = T_a$.

The motor drive assembly 300 thence provides the modified torque assistance, $T_m$, at the steering column 104 (or rack 108) to aid in the avoidance of a collision between elements of the rack and pinion steering apparatus 100 and an end-of-travel stop. It will be appreciated by one skilled in the art that, though the angular steering position, $\theta_c$, and the angular velocity, $\omega_c$, is referred to in this disclosure, it is also possible to utilize, for example, the linear position, $L_c$, of the rack 108 instead. This is so in that $\theta_c$ and $L_c$ differ only by a multiplicative constant, k, representative of the gear ratio between the steering column 104 and the rack 108, i.e., $\theta_c = k \bullet L_c$ and $\omega_c = k \bullet dL_c/dt$.

Reference will now be had to Figure 11. Therein depicted is a flow chart 600 of the method of the invention. In box 602 the angular steering position, $\theta_c$, is measured. In box 604 the angular velocity $\omega_c$. In box 606 the absolute value, $|\theta_c|$, of the angular steering position is calculated. In box 608 a set point value $\theta_{eot}$ 506 is provided, representing the end-of-travel of the steering system. In box 610 the difference between $\theta_{eot}$ 506 and $|\theta_c|$ 504 is calculated yielding an error signal, E. In box 612 a dimensionless number, n, is generated from a database 512 based upon the error signal, E, and the angular velocity $\omega_c$. In box 614 the dimensionless number, n, is multiplied by the torque assist command, TAC, yielding a modified torque assist command, MTAC. In box 616 the modified torque assist command, MTAC, is conveyed to the motor drive assembly 300 whereupon the nature of the modified torque assist command, MTAC, is such that if n < 0, the modified torque, $T_m$, is such as to tend to reverse or counter the aforesaid torque assistance, $T_a$, by some fractional amount, $n \bullet T_a$, and thus aid in avoidance of the aforesaid collision between elements of the rack and pinion steering apparatus 100 and an end-of-travel stop. If n = 0 then the no torque assistance is provided, i.e., $T_a = T_m = 0$. If n > 0 the modified torque assistance, $T_m$, is some fractional amount of the aforesaid torque assistance, $T_a$, i.e., $T_m=n \bullet T_a$.

**Torque Limit Embodiment**

Reference will now be had to Figures 12 through 15, which refer to the torque limit embodiment of the invention. In this embodiment, there is produced a torque limit on the steering assist motor that sets a maximum value for the assist motor torque. There may, however, be several different torque limiting systems operating simultaneously in the power steering system, the most common of which will be an upper torque assist limit that decreases with increasing vehicle speed or engine RPM, thereby preventing undesirable power steering "wobble" at high speeds. In the most preferred embodiment, the torque limit produced by this torque limit system will be used as a limiting torque value only if all of the other torque limiting systems produce a greater torque limit value. That is, the controller compares a plurality of torque limit values that are produced by the various torque limiting systems, and applies the lowest value to the motor.

Limitation of assist torque to reduce the energy in end-of-travel impacts is generally not desired until the steering system is approaching an end-of travel, $\theta_{eot}$. The torque assist torque command (TAC) is therefore preferably limited only when the angular steering position, $\theta_c$, passes a defined threshold angle off of its on-center position. The threshold angle is the angle from on-center beyond which actual motor torque is limited by the controller because of the end-of-travel impact assist torque limit. The invention uses a function dependent upon the actual, $\theta_c$, or estimated position of the steering wheel to determine the assist torque limit, and therefore can be programmed to limit torque only when the steering wheel moves past the threshold angle.

The following equation is the equation used to determine the torque assist limit produced by the system in one embodiment of the invention:

$$TL = M(\omega_c - \omega_{int})$$

where M is the defined slope of the function, TL is the torque limit, $\omega_c$ is the angular velocity of the steering column, and $\omega_{int}$ is the angular velocity intercept, which is a value determined by the actual or estimated angular position of the steering wheel.

A representative graph of three torque limit equations is shown in Figure 12. Each line represents the equation used to determine assist torque limit for a particular angular steering position, $\theta_c$. The Y-axis represents the torque limit (motor torque maximum), and the X-axis represents the speed of the system. The line corresponding to torque limit Position 1, $\theta_{c1}$, represents an angular steering position, $\theta_c$, that is closer to center than either the line representing torque limit Position 2, $\theta_{c2}$, or torque limit Position 3, $\theta_{c3}$. As angular steering position, $\theta_c$, approaches the end-of-travel, $\theta_{eot}$, the angular velocity intercept, $\omega_{int}$, of the function used to determine torque limit is decreased. The invention may utilize a table of defined angular velocity intercept values that correspond to various angular steering positions, $\theta_c$.

Although the three torque limit position lines shown in Figure 12 show torque limit values exceeding 3 Nm, in operation other torque limiting systems will generally signal the controller to limit assist torque to values below 3 Nm (as shown by the dashed line). Note that these torque limit values and ranges are merely illustrative and will, of course, vary from system to system in actual application. Notice that negative torque limit values are shown in Figure 12 for steering rates $\omega_c$ that exceed the angular velocity intercept value $\omega_{int}$. In this

case, the controller can set a zero torque limit, which would entirely remove motor assist torque from the steering system or, optionally, the controller could have the motor generate a negative torque in opposition to the steering motion.

The slope M of the three lines in the example of Figure 12 is approximately

$$M = -0.0075 \frac{Nm}{Rad / Sec}.$$

This slope is one example of a defined slope that could be used in the invention, and is an example of a slope value that limits torque so that an approximately equivalent end-of-travel impact force occurs at all angular velocities, $\omega_c$. The slope can be set at a value that will yield approximately equivalent force during end-of-travel impacts among varying angular velocities, $\omega_c$, or any other value that protects the integrity of the mechanical components of the steering system.

Defining the slope value, M, based on desired impact range and the angular velocity intercept value, $\omega_{int}$, based on the angular steering position, $\theta_c$, establishes the equation of the line, and allows the controller to use the equation appropriate for the angular steering position, $\theta_c$, to compute a maximum assist torque based on the angular velocity, $\omega_c$. The angular velocity intercept values, $\omega_{int}$, assigned to the angular steering positions, $\theta_c$, may be assigned in a linear fashion. If the three angular steering positions shown in Figure 12 are evenly spaced, for example, then their respective angular velocity intercepts, $\omega_{int}$, are decreasing linearly from the angular velocity intercept, $\omega_{int1}$, assigned to position 1, $\theta_{c1}$, to the angular velocity intercept, $\omega_{int3}$, assigned to position 3, $\theta_{c3}$.

The angular velocity intercepts, $\omega_{int}$, however, need not be linearly arranged with the angular steering position, $\theta_c$. Angular velocity intercept values, $\omega_{int}$, can vary linearly, piecewise linearly, or nonlinearly, depending on the application. Regardless of their arrangement, however, angular velocity intercept values, $\omega_{int}$, over the range of angular steering positions from on-center to the threshold position on either side of center will be large enough to prevent torque limits that reduce the assist torque. That is, the defined angular velocity intercepts, $\omega_{int}$, when used in the torque limit equation, will produce a torque limit that exceeds the actual motor torque as determined by the controller based on other inputs. Therefore, no limiting of torque from the end-of-travel impact management system will occur when the angular steering position, $\theta_c$, is between on-center and the threshold positions.

An angular velocity intercept lookup table 513 can be included as part of the database 512 of Figure 4. Hence, both the modification factor embodiment and the torque limit embodiment disclosed herein may coexist simultaneously in the same power steering system structure as shown in Figures 1 through 4. The lookup table 513 stores defined angular velocity intercepts, $\omega_{int}$, for different angular steering positions, $\theta_c$. The angular velocity intercept lookup table 513 may be physically located within the controller 400, or may be in any location that is in communication with the controller 400. Angular velocity intercept values, $\omega_{int}$, can also be calculated from defined formulas that use defined on-center, threshold, and end-of-travel angles, $\theta_{eot}$, to interpolate angular velocity intercept values, $\omega_{int}$, for any angular steering position, $\theta_c$.

After receiving data from the various input sources, the controller 400 determines the correct end-of-travel assist torque limit value, TL. The torque limit value, TL, will then be used to limit the controller output torque value, MTAC, if the controller 400 determines that the torque limit value, TL, is the smallest torque limit produced by the plurality of torque limiting systems. The torque limit value, TL, generated by the system will be used only if the output torque value, MTAC otherwise specified by the controller 400 for the motor is larger than the torque limit value, TL.

Figure 13 shows the algorithm used by the system to compute and apply the torque limit value, TL, to the motor. In step 700 the algorithm is started. Step 700 will generally correspond to vehicle start up or electrical start up.

In step 701, the angular steering position signal, $\theta_c$, is input to the controller 400. In step 702, the angular steering position value is used by the controller 400 to retrieve the matching angular velocity intercept value from the angular velocity intercept lookup table 513. Alternatively, the angular steering position value can be used in a sub-routine function to interpolate angular velocity intercepts based on defined angular velocity intercept values for on-center, threshold, and end-of-travel positions. In step 703, the angular velocity signal, $\omega_c$, is input to the controller 400. In step 704, the controller 400 uses the values obtained in steps 701-703 and the equation for torque limit to compute the end-of-travel assist torque limit. In step 705, the torque limit produced in step 704 is compared to the current output torque value, MTAC, and the torque limits produced by the other torque limiting systems. If the torque limit value is greater than the current output torque value, MTAC, or any of the torque limits of the other torque limiting systems, then flow proceeds to step 701 and the controller 400 checks for new sensor values. If, alternatively, the torque limit value produced in step 704 is less than the current output torque value, MTAC, and all of the torque limits produced by the other torque limiting systems, then the current output torque value, MTAC, is changed to the end-of-travel assist torque limit value, TL, in step 706, and flow proceeds to step 701. Optionally, the angular velocity value, $\omega_c$, can be taken before the angular steering position, $\theta_c$, is determined in step 701 or before the angular velocity intercept, $\omega_{int}$, is retrieved in step 702.

Figures 14A and 14B show illustrative torques on the pinion of the steering column for the left side and the right side for several end-of-travel impacts. The Y-axis represents the square of the angular velocity, $\omega_c^2$, at the steering wheel. Because system inertia (I) is the same for each trial condition, rotations per minute squared values represent the relative kinetic energy of each trial. The X-axis represents the torque on the pinion gear in Newton meters. Five sample algorithms (series) are shown to reduce the end-of-travel impacts relative to an electric steering system without end-of-travel torque limit protection.

In another embodiment, the actual steering angular steering position, $\theta_c$, is not known when the system is started. Because the angular velocity intercept value, $\omega_{int}$, is determined in relation to the angular steering position, $\theta_c$, and no actual angular steering position is known at start, the system must assume an initial angular steering position. If the angular steering position corresponding to the end-of-travel angular velocity intercept value is used as the initial angular steering position value, the torque limit produced by the system will be maximally protective. If, however, the system changes the assumed position value to the actual value, $\theta_c$, too suddenly, undesirable unevenness in steering assist could be created. To prevent this, the angular steering position value is "walked" towards its actual value, $\theta_c$, and the torque limit produced by the system is gradually adjusted until it matches the value that would have been produced by a system that indicated actual angular steering position, $\theta_c$, at start up.

Figure 15 shows a preferred embodiment of a torque limit algorithm that could be used in an end-of-travel impact management system that does not use an absolute angular position signal, $\theta_c$, immediately upon start up 700. Steps that are identical to those in Figure 13 are numbered identically in this drawing, while new steps are numbered in the 800s for easy comparison. Step 801 is performed immediately upon start up 700 of the system, and entails setting an angular steering position estimate to a default value, which can be the end-of-travel value or any other value that provides the desired protection against end-of-travel impacts. Flow then proceeds to step 701, where an angular position signal, $\theta_c$, is input to the controller as in Figure 13.

If the angular position signal, $\theta_c$, is found to be valid in step 803, then flow proceeds to step 804, where the controller 400 compares the actual position value, $\theta_c$, input in step 701 to the angular steering position estimate value. The angular steering position estimate default value set in step 801 will be the angular steering position estimate value the first time flow reaches step 804. If the angular steering position estimate value differs from the actual position value, $\theta_c$, by more than a defined amount, then flow proceeds to step 805 where the angular steering position estimate value is adjusted (gradually) toward the actual position, $\theta_c$, at a specified rate, this rate being gradual enough so as not to generate a noticeable change in steering feel. After several passes, the difference between the angular steering position estimate and the actual position, $\theta_c$, will fall below the threshold value defined in step 804, and flow will proceed to step 811, where the estimate value is set to the actual value, $\theta_c$. Subsequent passes will flow through step 811 and the system will function without walking steps. If in step 803 the system determines the angular position signal is not valid, then the angular steering position estimate is ramped toward the default value set in step 801. In either case, flow then proceeds to steps 702 through 706 as before and then returns to step 701, where an angular position signal, $\theta_c$, is again input.

Other embodiments include a formulation with a fixed torque limit equation having only one angular velocity intercept, $\omega_{int}$. In this embodiment, the angular steering position value, $\theta_c$, input is scaled with a position-dependent constant. The net effect of such scaling is to produce torque limits, TL, that are similar to those produced in a system that uses multiple angular velocity intercepts, $\omega_{int}$.

Another embodiment uses a non-linear torque limit function. The torque limit function in this embodiment is designed to have a more negative slope, M, at greater angular velocity, $\theta_c$, values. As in the first embodiment, angular velocity intercept values, $\omega_{int}$, are defined for different angular steering positions, $\theta_c$, and torque limit values, TL, are determined after angular velocity intercept values, $\omega_{int}$, are derived. This embodiment allows for non-linear increases in torque limits, TL, at given angular steering positions, $\theta_c$, as angular velocity values, $\omega_c$, increase.

Another embodiment uses a closed loop structure. In this embodiment, a target angular velocity corresponding to the desired amount of kinetic energy is computed as a function of angular steering position, $\theta_c$. A look-up table can be used to define the target angular velocity values. Torque limits, TL, are decreased if the target angular velocity is less than the actual angular velocity, $\omega_c$, and increased if the target angular velocity is greater than the actual angular velocity, $\omega_c$. An integrator coefficient is multiplied by the difference between actual, $\omega_c$, and target angular velocity to arrive at the desired torque limit, TL.

While preferred embodiments have been shown and described, various modifications and substitutions may be made thereto without departing from the scope of the invention as defined in the appended claims. Accordingly, it is to be understood that the invention has been described by way of illustration only, and such illustrations and embodiments as have been disclosed herein are not to be construed as limiting to the claims.

## Claims

1. A system (500) for controlling collisions between elements of an automotive rack and pinion steering apparatus (100) and an end-of-travel stop, said system comprising:

a motor drive assembly (300) operative to provide a torque assist to said rack and pinion steering apparatus;
a sensor (200) for sensing a set of dynamic variables of said rack and pinion steering apparatus and operative thereby to generate as output therefrom a first set of signals indicative of said set of dynamic variables;
a controller (400) responsive to said first set of signals and operative thereby to reduce or limit said toque assist provided by said motor drive assembly as the steering apparatus approaches said end-of-travel impact torque in said rack and pinion steering apparatus;
wherein said dynamic variables comprise an angular steering position of a steering column or a linear steering position of a rack to produce an angular steering position signal ($\theta_c$); and a steering velocity of said steering column to produce an angular velocity signal ($\omega_c$); the controller being receptive to said steering angle position signal and said angular velocity signal to generate a torque assist command signal for reducing end-of-travel impact torque in said rack and pinion steering apparatus.

**2.** The system of Claim 1 wherein said set of dynamic variables of said rack and pinion steering apparatus comprises:

an angular steering position of said steering column (104) or a linear position of the rack (108) of said rack and pinion steering apparatus; and a torque ($T_c$) acting upon said steering column.

**3.** The system of Claim 1 wherein said controller comprises:

a steering assist subsystem (402) responsive to said first set of signals and operative thereby to provide as output therefrom
a torque assist command (TAC); and
an angular velocity command; and
an impact avoidance control subsystem (500) responsive to
said torque assist command;
said angular velocity command and
a first signal of said first set of signals; and
wherein said avoidance control subsystem is operative thereby to provide as output therefrom a modified torque assist command (MTAC).

**4.** The system of Claim 3 wherein said impact avoidance control subsystem (500) comprises:

an absolute value operator (502) responsive to said first signal of said first set of signals and operative thereby to provide as output therefrom said absolute value of said first signal of said first set of signals;
an end-of-travel angular steering position ($\theta_{eot}$) of said steering column;
a summing junction (508) operative to provide as output therefrom an error signal equal to said difference between said absolute value of said first signal of said first set of signals and said end-of-travel angular steering position of said angular steering position of said steering column;
a database (512) operative to accept as input thereto said error signal and said angular velocity command and operative thereby to provide as output therefrom a number having a value from -1 to +1 inclusive; and
a multiplier operative to multiply said number output from said database by said steering assist command providing thereby said modified torque assist command (MTAC).

**5.** A method of controlling collisions between elements of an automotive rack and pinion steering apparatus and an end-of-travel stop, the steering apparatus having a motor drive assembly (300) operative to provide a torque assist to said rack and pinion steering apparatus, said method comprising:

providing a sensor (200) for sensing a set of dynamic variables of said rack and pinion steering apparatus and operative thereby to generate as output therefrom a first set of signals indicative of said set of dynamic variables;
providing a controller (400) responsive to said first set of signals and operative to reduce or limit the torque assist provided by said motor drive assembly as the steering apparatus approaches said end-of-travel impact torque in said rack and pinion steering apparatus;
wherein said dynamic variables comprise an angular steering position signal ($\theta_c$) and an angular velocity signal ($\omega_c$).

**6.** The method of Claim 5 wherein sensing said set of dynamic variables of said rack and pinion steering apparatus comprises:

sensing an angular steering position of said steering column or a linear position of the rack of said rack and pinion steering apparatus; and sensing a torque ($T_c$) acting upon said steering column.

**7.** The method of Claim 5 wherein providing said controller comprises:

providing a steering assist subsystem responsive to said first set of signals and operative thereby to provide as output therefrom
a torque assist command (TAC) and
an angular velocity command; and
providing an impact avoidance control subsystem (500) responsive to
said torque assist command (TAC),
said angular velocity command and
a first signal of said first set of signals; and
wherein said avoidance control subsystem is operative thereby to provide as output therefrom a modified torque assist command (MTAC).

**8.** The method of Claim 7 wherein providing said impact avoidance control subsystem (500) comprises:

providing an absolute value operator (502) responsive to said first signal of said first set of signals and operative thereby to provide as output therefrom said absolute value of said first signal of said first set of signals;
providing a end-of-travel angular steering position ($\theta_{eot}$) of said angular steering position of said steering column;
providing a summing junction (508) operative to provide as output therefrom an error signal equal to said difference between said absolute value of said first signal of said first set of signals and said end-of-travel angular steering position of said angular steering position of said steering column;
providing a database (512) operative to accept as input thereto said error signal and said angular velocity command and operative thereby to provide as output therefrom a number having a value from -1 to +1 inclusive; and
providing a multiplier operative to multiply said number output from said database by said steering assist command providing thereby said modified torque assist command (MTAC).

**9.** The method of Claim 8 further comprising:

measuring said angular steering position of said steering column;
measuring said angular velocity of said steering column;
calculating an absolute value of said angular steering position of said angular steering position;
taking said difference between said end-of-travel angular steering position and said angular steering position of said steering column yielding an error signal;
generating a dimensionless number having a value between -1 and +1 inclusive;
multiplying said dimensionless number by said torque assistance command yielding a modified torque assistance command; and
conveying said modified torque assistance command to said motor drive assembly.

**10.** The system of claim 1 wherein said torque assist command signal is a decreasing function of angular velocity.

**11.** The system of claim 10 wherein said torque assist command signal is a function of angular steering position.

**12.** The system of claim 1 wherein said torque assist command signal is a function of angular steering position.

**13.** The system of claim 1 wherein said means for determining angular velocity comprises means for indirectly determining angular velocity.

**14.** The system of claim 13 wherein said means for indirectly determining angular velocity comprises means for estimating angular velocity based upon differentiated motor drive assembly position or voltage/current measurements of said motor drive assembly.

**15.** The system of claim 1 wherein said means for directly determining angular velocity comprises an angular velocity sensor adapted to sense angular velocity at said motor drive assembly, a steering wheel or column, or a rack.

**16.** The system of claim 1 wherein said means for determining angular steering position comprises a position sensor adapted to sense angular steering position at said motor drive assembly (300), a steering wheel (102), or column (104), or a rack (108).

**17.** The system of claim 1 wherein said controller generates said control signal according to:

$$TL = M(\omega_c - \omega_{int})$$

where *M* is a defined slope of said function, *TL* is a torque limit applied to said motor drive assembly, $\omega_c$ is the angular velocity of said steering column, and $\omega_{int}$ is an angular velocity intercept.

**18.** The system of claim 1 wherein said torque assist command signal is further based on comparing an angular steering position value with said steering angular position signal and adjusting said angular steering position value toward said steering angular position signal at a gradual defined rate when said angular steering position value and said steering angular position signal differ by more than a defined amount.

**19.** The method of claim 5 wherein said controller controls the torque assist utilizing a decreasing function of angular velocity.

**20.** The method of claim 19 wherein said controller controls the torque assist utilizing a function of angular steering position.

**21.** The method of claim 5 wherein said controller controls the torque assist utilizing a function of angular steering position.

**22.** The method of claim 5 wherein said producing said angular velocity signal comprises indirectly determining said angular velocity signal.

**23.** The method of claim 22 wherein said indirectly determining said angular velocity signal comprises estimating angular velocity based upon differentiated motor drive assembly position or voltage/current measurements of said motor drive assembly.

**24.** The method of claim 5 wherein said controlling is according to:

$$TL = M(\omega_c - \omega_{int})$$

where M is a defined slope of said function, TL is a torque limit applied to said motor drive assembly, $\omega_c$ is the angular velocity of said steering column, and $\omega_{int}$ is an angular velocity intercept.

**25.** The method of claim 5 wherein said controlling further comprises:

comparing an angular steering position value with said steering angular position signal and adjusting said angular steering position value toward said steering angular position signal at a gradual defined rate when said angular steering position value and said steering angular position signal differ by more than a defined amount.

**26.** A method of claim 5 comprising the further steps of:

producing an angular steering position signal; and,
comparing an angular steering position value with said steering angular position signal and adjusting said angular steering position value toward said steering angular position signal at a gradual defined rate when said angular steering position value and said steering angular position signal differ by more than a defined value.

**Patentansprüche**

**1.** System (500) zum Steuern von Zusammenstößen zwischen Elementen einer Kraftfahrzeug-Zahnstangenlenkvorrichtung (100) und einem Bewegungsende-Anschlag, wobei das System umfasst:

eine Motorantriebsanordnung (300), die betreibbar ist, um eine Drehmomentunterstützung für die Zahnstangenlenkvorrichtung zu schaffen;
einen Sensor (200) zum Erfassen eines Satzes von dynamischen Variablen der Zahnstangenlenkvorrichtung, der dadurch betreibbar ist, um als seinen Ausgang einen ersten Satz von Signalen zu erzeugen, die den Satz von dynamischen Variablen angeben;
einen Controller (400), der auf den ersten Satz von Signalen anspricht und dadurch betreibbar ist, um die durch die Motorantriebsanordnung geschaffene Drehmomentunterstützung zu verringern oder zu begrenzen, wenn sich die Lenkvorrichtung dem Bewegungsende-Stoßdrehmoment in der Zahnstangenlenkvorrichtung annähert;
wobei die dynamischen Variablen eine Winkel-Lenkposition einer Lenksäule oder eine lineare Lenkposition einer Zahnstange umfassen, um ein Winkel-Lenkpositionssignal ($\theta_c$) zu erzeugen; und eine Lenkgeschwindigkeit der Lenksäule umfassen, um ein Winkelgeschwindigkeitssignal ($\omega_c$) zu erzeugen; wobei der Controller das Lenkwinkelpositionssignal und das Winkelgeschwindigkeitssignal empfängt, um ein Drehmomentunterstützungs-Befehlssignal zu erzeugen, um das Bewegungsende-Stoßdrehmoment in der Zahnstangenlenkvorrichtung zu verringern.

**2.** System nach Anspruch 1, wobei der Satz von dynamischen Variablen der Zahnstangenlenkvorrichtung umfasst:

eine Winkel-Lenkposition der Lenksäule (104) oder eine lineare Position der Zahnstange (108) der Zahnstangenlenkvorrichtung; und
ein Drehmoment ($T_c$), das auf die Lenksäule wirkt.

**3.** System nach Anspruch 1, wobei der Controller umfasst:

ein Lenkunterstützungs-Untersystem (402), das auf den ersten Satz von Signalen anspricht und betreibbar ist, um als seinen Ausgang
einen Drehmomentunterstützungsbefehl (TAC) und
einen Winkelgeschwindigkeitsbefehl bereitzustellen; und
ein Stoßvermeidungs-Steueruntersystem (500), das auf
den Drehmomentunterstützungsbefehl,
den Winkelgeschwindigkeitsbefehl und
ein erstes Signal des ersten Satzes von Signalen anspricht;
wobei das Vermeidungs-Steueruntersystem dadurch betreibbar ist, um als seinen Ausgang einen modifizierten Drehmomentunterstützungsbefehl (MTAC) bereitzustellen.

**4.** System nach Anspruch 3, bei dem das Stoßvermeidungs-Steueruntersystem (500) umfasst:

einen Absolutwert-Operator (502), der auf das erste Signal des ersten Satzes von Signalen anspricht und dadurch betreibbar ist, um als seinen Ausgang den Absolutwert des ersten Signals des ersten Satzes von Signalen bereitzustellen;
eine Bewegungsende-Winkel-Lenkposition ($\theta_{eot}$) der Lenksäule;
eine Summierungsverbindung (508), die betreibbar ist, um als ihren Ausgang ein Fehlersignal bereitzustellen, das gleich der Differenz zwischen dem Absolutwert des ersten Signals des ersten Satzes von Signalen und der Bewegungsende-Winkel-Lenkposition der Winkel-Lenkposition der Lenksäule ist;
eine Datenbank (512), die betreibbar ist, um als ihren Eingang das Fehlersignal und den Winkelgeschwindigkeitsbefehl zu akzeptieren und dadurch betreibbar ist, um als ihren Ausgang eine Zahl mit einem Wert im Bereich von -1 bis +1 einschließlich bereitzustellen; und
einen Multiplizierer, der betreibbar ist, um die von der Datenbank ausgegebene Zahl mit dem Lenkunterstützungsbefehl zu multiplizieren und dadurch den modifizierten Drehmomentunterstützungsbefehl (MTAC) bereitzustellen.

**5.** Verfahren zum Steuern von Zusammenstößen zwischen Elementen einer Kraftfahrzeug-Zahnstangenlenkvorrichtung und einem Bewegungsende-Anschlag, wobei die Lenkvorrichtung eine Motorantriebsanordnung (300) besitzt, die betreibbar ist, um für die Zahnstangen-Lenkvorrichtung eine Drehmomentunterstützung bereitzustellen, wobei das Verfahren umfasst:

Vorsehen eines Sensors (200) zum Erfassen eines Satzes von dynamischen Variablen der Zahnstangenlenkvorrichtung, der dadurch betreibbar ist, um als seinen Ausgang einen ersten Satz von Signalen zu erzeugen, die den Satz von dynamischen Variablen angeben;
Vorsehen eines Controllers (400), der auf den ersten Satz von Signalen anspricht und betreibbar ist, um die durch die Motorantriebsanordnung bereitgestellte Drehmomentunterstützung zu verringern oder zu begrenzen, wenn sich die Lenkvorrichtung dem Bewegungsende-Stoßdrehmoment in der Zahnstangenlenkvorrichtung annähert;
wobei die dynamischen Variablen ein Winkel-Lenkpositionssignal ($\theta_c$) und ein Winkelgeschwindigkeitssignal ($\omega_c$) umfassen.

**6.** Verfahren nach Anspruch 5, bei dem das Erfassen des Satzes von dynamischen Variablen der Zahnstangenlenkvorrichtung umfasst:

Erfassen einer Winkel-Lenkposition der Lenksäule oder einer linearen Position der Zahnstange der Zahnstangenlenkvorrichtung; und
Erfassen eines Drehmoments ($T_c$), das auf die Lenksäule wirkt.

**7.** Verfahren nach Anspruch 5, bei dem das Vorsehen des Controllers umfasst:

Vorsehen eines Lenkunterstützungs-Untersystems, das auf den ersten Satz von Signalen anspricht und dadurch betreibbar ist, um als seinen Ausgang
einen Drehmomentunterstützungsbefehl (TAC) und
einen Winkelgeschwindigkeitsbefehl bereitzustellen; und
Vorsehen eines Stoßvermeidungs-Steueruntersystems (500), das auf
den Drehmomentunterstützungsbefehl (TAC),
den Winkelgeschwindigkeitsbefehl und
ein erstes Signal des ersten Satzes von Signalen anspricht;
wobei das Vermeidungs-Steueruntersystem dadurch betreibbar ist, um als seinen Ausgang einen modifizierten Drehmomentunterstützungsbefehl (MTAC) bereitzustellen.

**8.** Verfahren nach Anspruch 7, bei dem das Vorsehen des Stoßvermeidungs-Steueruntersystems (500) umfasst:

Vorsehen eines Absolutwert-Operators (502), der auf das erste Signal des ersten Satzes von Signalen anspricht und dadurch betreibbar ist, um als seinen Ausgang den Absolutwert des ersten Signals des ersten Satzes von Signalen bereitzustellen;
Vorsehen einer Bewegungsende-Winkel-Lenkposition ($\theta_{eot}$) der Winkel-Lenkposition der Lenksäule;
Vorsehen einer Summierungsverbindung (508), die betreibbar ist, um als ihren Ausgang ein Fehlersignal bereitzustellen, das gleich der Differenz zwischen dem Absolutwert des ersten Signals des ersten Satzes von Signalen und der Bewegungsende-Winkel-Lenkposition der Winkel-Lenkposition der Lenksäule ist;
Vorsehen einer Datenbank (512), die betreibbar ist, um als ihren Eingang das Fehlersignal und den Winkelgeschwindigkeitsbefehl zu akzeptieren und dadurch betreibbar ist, um als ihren Ausgang eine Zahl mit einem Wert im Bereich von -1 bis + 1 einschließlich bereitzustellen; und
Vorsehen eines Multiplizierers, der betreibbar ist, um die von der Datenbank ausgegebene Zahl mit dem Lenkunterstützungsbefehl zu multiplizieren und dadurch den modifizierten Drehmomentunterstützungsbefehl (MTAC) bereitzustellen.

**9.** Verfahren nach Anspruch 8, das ferner umfasst:

Messen der Winkel-Lenkposition der Lenksäule;
Messen der Winkelgeschwindigkeit der Lenksäule;
Berechnen eines Absolutwerts der Winkel-Lenkposition der Winkel-Lenkposition;
Bilden der Differenz zwischen der Bewegungsende-Winkel-Lenkposition und der Winkel-Lenkposition der Lenksäule, um ein Fehlersignal zu liefern;
Erzeugen einer dimensionslosen Zahl mit einem Wert im Bereich von -1 bis + 1 einschließlich;
Multiplizieren der dimensionslosen Zahl mit dem Drehmomentunterstützungsbefehl, um einen modifizierten Drehmomentunterstützungsbefehl zu liefern; und
Übertragen des modifizierten Drehmomentunterstützungsbefehls an die Motorantriebsanordnung.

**10.** System nach Anspruch 1, bei dem das Drehmomentunterstützungs-Befehlssignal eine abnehmende Funktion der Winkelgeschwindigkeit ist.

**11.** System nach Anspruch 10, bei dem das Drehmomentunterstützungs-Befehlssignal eine Funktion der Winkel-Lenkposition ist.

**12.** System nach Anspruch 1, bei dem das Drehmomentunterstützungs-Befehlssignal eine Funktion der Winkel-Lenkposition ist.

**13.** System nach Anspruch 1, bei dem die Mittel zum Bestimmen der Winkelgeschwindigkeit Mittel zum indirekten Bestimmen der Winkelgeschwindigkeit umfassen.

**14.** System nach Anspruch 13, bei dem die Mittel zum indirekten Bestimmen der Winkelgeschwindigkeit Mittel zum Schätzen der Winkelgeschwindigkeit anhand der differenzierten Position der Motorantriebsanordnung oder von Spannungs-/Strommessungen der Motorantriebsanordnung umfassen.

**15.** System nach Anspruch 1, bei dem die Mittel zum direkten Bestimmen der Winkelgeschwindigkeit einen Winkelgeschwindigkeitssensor umfassen, der so beschaffen ist, dass er die Winkelgeschwindigkeit bei der Motorantriebsanordnung, einem Lenkrad oder einer Lenksäule oder einer Zahnstange erfasst.

**16.** System nach Anspruch 1, bei dem die Mittel zum Bestimmen der Winkel-Lenkposition einen Positionssensor umfassen, der so beschaffen ist, dass er die Winkel-Lenkposition bei der Motorantriebsanordnung (300), einem Lenkrad (102) oder einer Lenksäule (104) oder einer Zahnstange (108) erfasst.

**17.** System nach Anspruch 1, bei dem der Controller das Steuersignal gemäß

$$TL = M(\omega_c - \omega_{int})$$

erzeugt, wobei M eine definierte Steigung der Funktion ist, TL eine auf die Motorantriebsanordnung angewendete Drehmomentgrenze ist, $\omega_c$ die Winkelgeschwindigkeit der Lenksäule ist und $\omega_{int}$ ein Winkelgeschwindigkeitsabschnitt ist.

**18.** System nach Anspruch 1, bei dem das Drehmomentunterstützungs-Befehlssignal ferner auf dem Vergleich eines Winkel-Lenkpositionswertes mit dem Lenkwinkelpositionssignal und auf dem Einstellen des Winkel-Lenkpositionswertes auf das Lenkwinkelpositionssignal mit einer graduellen definierten Rate basiert, wenn sich der Winkel-Lenkpositionswert und das Lenkwinkelpositionssignal um mehr als einen definierten Betrag unterscheiden.

**19.** Verfahren nach Anspruch 5, bei dem der Controller die Drehmomentunterstützung unter Verwendung einer abnehmenden Funktion der Winkelgeschwindigkeit steuert.

**20.** Verfahren nach Anspruch 19, bei dem der Controller die Drehmomentunterstützung unter Verwendung einer Funktion der Winkel-Lenkposition steuert.

**21.** Verfahren nach Anspruch 5, bei dem der Controller die Drehmomentunterstützung unter Verwendung der Funktion der Winkel-Lenkposition steuert.

**22.** Verfahren nach Anspruch 5, bei dem die Erzeugung des Winkelgeschwindigkeitssignals das indirekte Bestimmen des Winkelgeschwindigkeitssignals umfasst.

**23.** Verfahren nach Anspruch 22, bei dem das indirekte Bestimmen des Winkelgeschwindigkeitssignals das Schätzen der Winkelgeschwindigkeit anhand der differenzierten Position der Motorantriebsanordnung oder von Spannungs-/Strommessungen der Motorantriebsanordnung umfasst.

**24.** Verfahren nach Anspruch 5, bei dem die Steuerung gemäß

$$TL = M(\omega_c - \omega_{int})$$

erfolgt, wobei M eine definierte Steigung der Funktion ist, TL eine auf die Motorantriebsanordnung angewendete Drehmomentgrenze ist, $\omega_c$ die Winkelgeschwindigkeit der Lenksäule ist und $\omega_{int}$ ein Winkelgeschwindigkeitsabschnitt ist.

**25.** Verfahren nach Anspruch 5, bei dem die Steuerung ferner umfasst:

Vergleichen des Winkel-Lenkpositionswertes mit dem Lenkwinkelpositionssignal und Einstellen des Winkel-Lenkpositionswertes auf das Lenkwinkelpositionssignal mit einer graduellen definierten Rate, wenn sich der Winkel-Lenkpositionswert und das Lenkwinkelpositionssignal um mehr als einen definierten Betrag unterscheiden.

**26.** Verfahren nach Anspruch 5, das ferner die folgenden Schritte umfasst:

Erzeugen eines Winkel-Lenkpositionssignals; und
Vergleichen eines Winkel-Lenkpositionswertes mit dem Lenkwinkelpositionssignal und Einstellen des Winkel-Lenkpositionswertes auf das Lenkwinkelpositionssignal mit einer graduellen definierten Rate, wenn sich der Winkel-Lenkpositionswert und das Lenkwinkelpositionssignal um mehr als einen definierten Wert unterscheiden.

**Revendications**

**1.** Système (500) pour contrôler les collisions entre les éléments d'un dispositif de direction à crémaillère (100) pour automobile et une butée de fin de course, ledit système comprenant :

un ensemble d'entraînement motorisé (300) servant à fournir une assistance de couple audit dispositif de direction à crémaillère ;
un capteur (200) pour détecter un ensemble de variables dynamiques dudit dispositif de direction à crémaillère et servant à générer en sortie un premier ensemble de signaux indicatif dudit ensemble de variables dynamiques ;
un organe de commande (400) réagissant audit premier ensemble de signaux et servant à réduire ou à limiter ladite assistance de couple fournie par ledit ensemble d'entraînement motorisé lorsque le dispositif de direction s'approche dudit couple de choc de fin de course dudit dispositif de direction à crémaillère ;
dans lequel lesdites variables dynamiques comprennent une position angulaire de direction d'une colonne de direction ou une position linéaire de direction d'une crémaillère pour produire un signal de position angulaire de direction ($\theta_c$); et une vitesse de direction de ladite colonne de direction pour produire un signal de vitesse angulaire ($\omega_c$); l'organe de commande réagissant audit signal de position angulaire de direction et audit signal de vitesse angulaire pour générer un signal de commande d'assistance de couple pour réduire le couple de choc de fin de course dudit dispositif de direction à crémaillère.

**2.** Système selon la revendication 1, dans lequel ledit ensemble de variables dynamiques dudit dispositif de direction à crémaillère comprend :

une position angulaire de direction de ladite colonne de direction (104) ou une position linéaire de la crémaillère (108) dudit dispositif de direction à crémaillère ; et
un couple ($T_c$) s'exerçant sur ladite colonne de direction.

**3.** Système selon la revendication 1, dans lequel ledit organe de commande comprend :

un sous - système d'assistance de direction (402) réagissant audit premier ensemble de signaux et servant à fournir en sortie
une commande d'assistance de couple (TAC) ; et
une commande de vitesse angulaire ; et
un sous-système de commande d'évitement de choc (500) réagissant à
ladite commande d'assistance de couple ;
ladite commande de vitesse angulaire et
un premier signal dudit premier ensemble de signaux ; et

dans lequel ledit sous - système de commande d'évitement de choc sert à fournir en sortie une commande modifiée d'assistance de couple (MTAC).

**4.** Système selon la revendication 3, dans lequel ledit sous - système d'évitement de choc (500) comprend :

un opérateur de valeur absolue (502) réagissant audit premier signal dudit premier ensemble de signaux et servant à fournir en sortie ladite valeur absolue dudit premier signal dudit premier ensemble de signaux ;
une position angulaire de direction de fin de course ($\theta_{eot}$) de ladite colonne de direction ;
un sommateur (508) servant à fournir en sortie un signal d'erreur égal à ladite différence entre ladite valeur absolue dudit premier signal dudit premier ensemble de signaux et ladite position angulaire de direction de fin de course de ladite position angulaire de direction de ladite colonne de direction ;
une base de données (512) servant à accepter en entrée ledit signal d'erreur et ladite commande de vitesse angulaire et servant à fournir en sortie un nombre de valeur comprise entre - 1 et + 1, ces valeurs étant inclues ; et
un multiplicateur servant à multiplier ledit nombre en sortie de ladite base de données par ladite commande d'assistance de direction pour fournir ladite commande modifiée d'assistance de couple (MTAC).

**5.** Procédé pour contrôler les collisions entre les éléments d'un dispositif de direction à crémaillère pour automobile et une butée de fin de course, le dispositif de direction ayant un ensemble d'entraînement motorisé (300) servant à fournir une assistance de couple audit dispositif de direction à crémaillère ; ledit procédé comprenant les étapes consistant à :

fournir un capteur (200) pour mesurer les valeurs d'un ensemble de variables dynamiques dudit dispositif de direction à crémaillère et servant à générer en sortie un premier ensemble de signaux indicatif des valeurs dudit ensemble de variables dynamiques ;
fournir un organe de commande (400) réagissant audit premier ensemble de signaux et servant à réduire ou à limiter ladite assistance de couple fournie par ledit ensemble d'entraînement motorisé lorsque le dispositif de direction s'approche dudit couple de choc de fin de course dudit dispositif de direction à crémaillère ;
dans lequel lesdites variables dynamiques comprennent un signal de position angulaire de direction ($\theta_c$) et un signal de vitesse angulaire ($\omega_c$).

**6.** Procédé selon la revendication 5, dans lequel la mesure des valeurs dudit ensemble de variables dynamiques dudit dispositif de direction à crémaillère comprend les étapes consistant à :

mesurer une position angulaire de direction de ladite colonne de direction ou une position linéaire de la crémaillère dudit dispositif de direction à crémaillère ; et à
mesurer un couple ($T_c$) s'exerçant sur ladite colonne de direction.

**7.** Procédé selon la revendication 5, dans lequel fournir ledit organe de commande consiste à :

fournir un sous - système d'assistance de direction réagissant audit premier ensemble de signaux et servant à fournir en sortie
une commande d'assistance de couple (TAC) ; et
une commande de vitesse angulaire ; et à
fournir un sous-système de commande d'évitement de choc (500) réagissant à
ladite commande d'assistance de couple (TAC) ;
ladite commande de vitesse angulaire et
un premier signal dudit premier ensemble de signaux ; et
dans lequel ledit sous - système de commande d'évitement de choc sert à fournir en sortie une commande modifiée d'assistance de couple (MTAC).

**8.** Procédé selon la revendication 7, dans lequel fournir ledit sous - système de commande d'évitement de choc (500) consiste à :

fournir un opérateur de valeur absolue (502) réagissant audit premier signal dudit premier ensemble de signaux et servant à fournir en sortie ladite valeur absolue dudit premier signal dudit premier ensemble de signaux ;
fournir une position angulaire de direction de fin de course ($\theta_{eot}$) de ladite position angulaire de direction de ladite colonne de direction ;
fournir un sommateur (508) servant à fournir en sortie un signal d'erreur égal à ladite différence entre ladite valeur absolue dudit premier signal dudit premier ensemble de signaux et ladite position angulaire de direction de fin de course de ladite position angulaire de direction de ladite colonne de direction ;
fournir une base de données (512) servant à accepter en entrée ledit signal d'erreur et ladite commande de vitesse angulaire et servant à fournir en sortie un nombre de valeur comprise entre - 1 et + 1, ces valeurs étant inclues ; et à
fournir un multiplicateur servant à multiplier ledit nombre en sortie de ladite base de données par ladite commande d'assistance de direction pour fournir ladite commande modifiée d'assistance de couple (MTAC).

**9.** Procédé selon la revendication 8, comprenant en outre les étapes consistant à :

mesurer ladite position angulaire de direction de ladite colonne de direction ;
mesurer ladite vitesse angulaire de ladite colonne de direction ;
calculer une valeur absolue de ladite position angulaire de direction de ladite colonne de direction ;
utiliser ladite différence entre ladite position angulaire de direction de fin de course et ladite position angulaire de direction de ladite colonne de direction pour produire un signal d'erreur ;
générer un nombre sans dimension de valeur comprise entre -1 et + 1, ces valeurs étant inclues ;
multiplier ledit nombre sans dimension par ladite commande d'assistance de couple pour produire une commande modifiée d'assistance de couple ; et
transmettre ladite commande modifiée d'assistance de couple au dit ensemble d'entraînement motorisé.

**10.** Système selon la revendication 1, dans lequel ledit signal de commande d'assistance de couple est une fonction décroissante de la vitesse angulaire.

**11.** Système selon la revendication 10, dans lequel ledit signal de commande d'assistance de couple est une fonction de la position angulaire de direction.

**12.** Système selon la revendication 1, dans lequel ledit signal de commande d'assistance de couple est une fonction de la position angulaire de direction.

**13.** Système selon la revendication 1, dans lequel ledit moyen pour déterminer la vitesse angulaire comprend un moyen pour déterminer indirectement la vitesse angulaire.

**14.** Système selon la revendication 13, dans lequel ledit moyen pour déterminer indirectement la vitesse angulaire comprend un moyen pour estimer la vitesse angulaire en se basant sur une différence de position de l'ensemble d'entraînement motorisé ou sur des mesures de tension / courant dudit ensemble d'entraînement motorisé.

**15.** Système selon la revendication 1, dans lequel ledit moyen pour déterminer directement la vitesse angulaire comprend un capteur de vitesse angulaire prévu pour mesurer la vitesse angulaire dudit ensemble d'entraînement, un volant ou une colonne de direction, ou une crémaillère.

**16.** Système selon la revendication 1, dans lequel ledit moyen pour déterminer la position angulaire de direction comprend un détecteur de position prévu pour détecter la position angulaire de direction dudit ensemble d'entraînement motorisé (300), un volant de direction (102), ou une colonne de direction (104), ou une crémaillère (108).

**17.** Système selon la revendication 1, dans lequel ledit organe de commande génère ledit signal de commande suivant :

$$TL = M\ (\omega_c - \omega_{int})$$

dans laquelle M est la pente définie de ladite fonction, TL est la limite de couple appliquée audit ensemble d'entraînement motorisé, $\omega_c$ est la vitesse angulaire de ladite colonne de direction, et $\omega_{int}$ est une valeur à l'origine de la vitesse angulaire.

**18.** Système selon la revendication 1, dans lequel ledit signal de commande d'assistance de couple est en outre basé sur une comparaison de ladite valeur de position angulaire de direction avec ledit signal de position angulaire de direction et sur un ajustement de ladite valeur de position angulaire de direction vers ledit signal de position angulaire de direction avec une vitesse progressive définie lorsque ladite valeur de position angulaire de direction et ledit signal de position angulaire de direction diffèrent de plus d'une valeur prédéfinie.

**19.** Procédé selon la revendication 5, dans lequel ledit organe de commande contrôle l'assistance de couple en utilisant une fonction décroissante de la vitesse angulaire.

**20.** Procédé selon la revendication 19, dans lequel ledit organe de commande contrôle l'assistance de couple en utilisant une fonction de la position angulaire de direction.

**21.** Procédé selon la revendication 5, dans lequel ledit organe de commande contrôle l'assistance de couple en utilisant une fonction de la position angulaire de direction.

**22.** Procédé selon la revendication 5, dans lequel ladite production dudit signal de vitesse angulaire comprend la détermination indirecte dudit signal de vitesse angulaire.

**23.** Procédé selon la revendication 22, dans lequel la détermination indirecte dudit signal de vitesse angulaire consiste à estimer la vitesse angulaire en se basant sur une différence de position de l'ensemble d'entraînement motorisé ou sur des mesures de tension / courant dudit ensemble d'entraînement motorisé.

**24.** Procédé selon la revendication 5, dans lequel ladite commande est réalisée suivant :

$$TL = M(\omega_c - \omega_{int})$$

dans laquelle M est la pente définie de ladite fonction, TL est une limite de couple appliquée à ladite transmission, $\omega_c$ est la vitesse angulaire de ladite colonne de direction, et $\omega_{int}$ est une valeur à l'origine de la vitesse angulaire.

**25.** Procédé selon la revendication 5, dans lequel ladite commande comprend en outre l'étape consistant à comparer une valeur de position angulaire de direction avec ledit signal de position angulaire de direction et à ajuster ladite valeur de position angulaire de direction vers ledit signal de position angulaire de direction avec une vitesse progressive définie lorsque ladite valeur de position angulaire de direction et ledit signal de position angulaire de direction diffèrent de plus d'une valeur prédéfinie.

**26.** Procédé selon la revendication 5, comprenant en outre les étapes consistant à :

produire un signal de position angulaire de direction ; et à

comparer une valeur de position angulaire de direction avec ledit signal de position angulaire de direction et à ajuster ladite valeur de position angulaire de direction vers ledit signal de position angulaire de direction avec une vitesse progressive définie lorsque ladite valeur de position angulaire de direction et ledit signal de position angulaire de direction diffèrent de plus d'une valeur prédéfinie.

FIG. 1

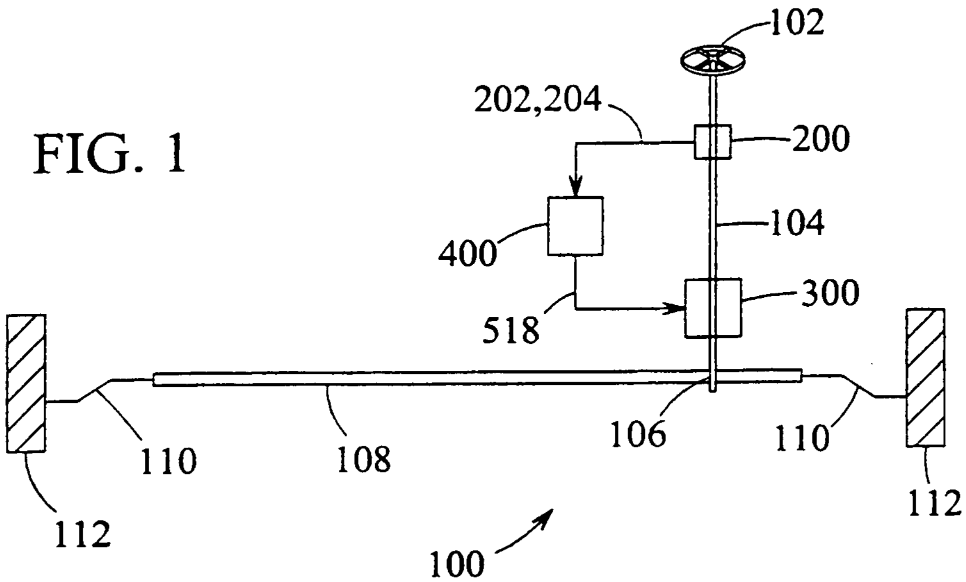
102
202,204
200
400
104
300
518
110
108
106
110
112
112
100

FIG. 2

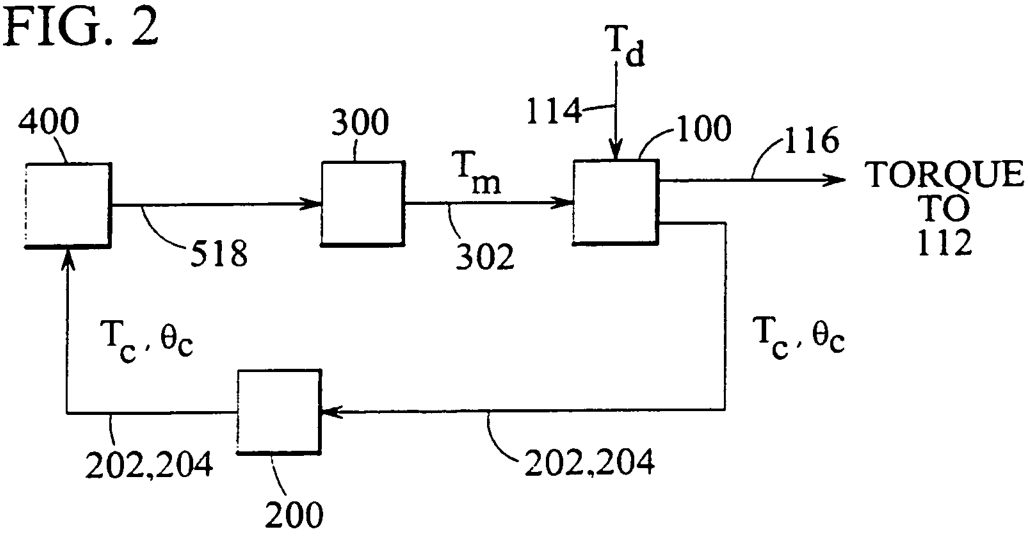
Td
114
400
300
100
116
Tm
TORQUE
TO
112
518
302
Tc, θc
Tc, θc
202,204
202,204
200

FIG. 3

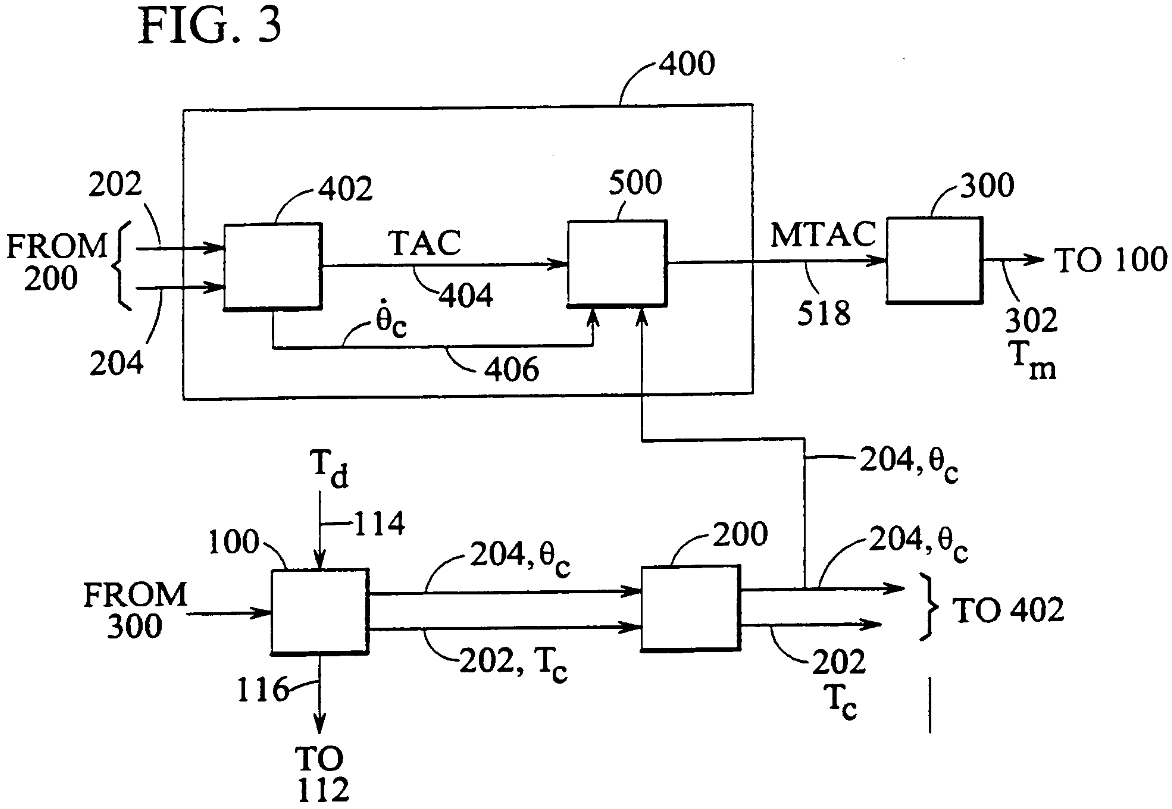

400
202
402
500
300
FROM 200
TAC
MTAC
TO 100
404
$\dot{\theta}_c$
518
302
$T_m$
204
406
204, $\theta_c$
$T_d$
114
100
200
204, $\theta_c$
204, $\theta_c$
FROM 300
TO 402
202, $T_c$
202
$T_c$
116
TO 112


FIG. 4

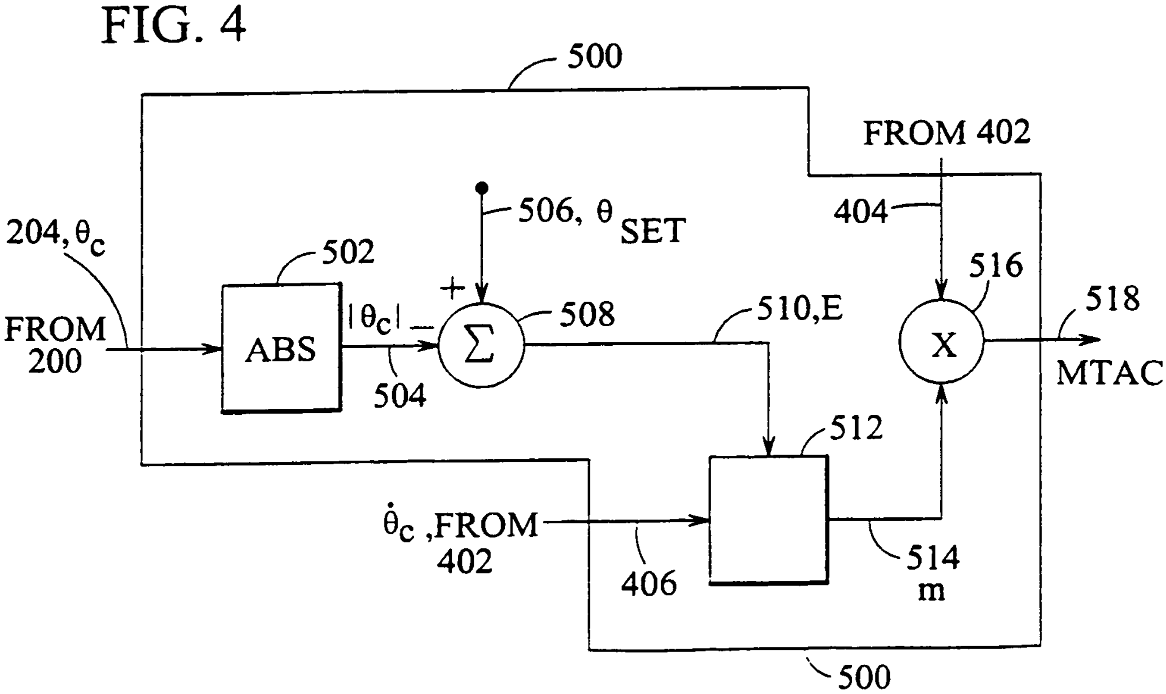

500
FROM 402
506, $\theta$ SET
404
204, $\theta_c$
502
516
+
518
FROM 200
ABS
$|\theta_c|$
–
$\Sigma$
508
510,E
X
MTAC
504
512
$\dot{\theta}_c$ ,FROM 402
406
514
m
500

FIG. 5

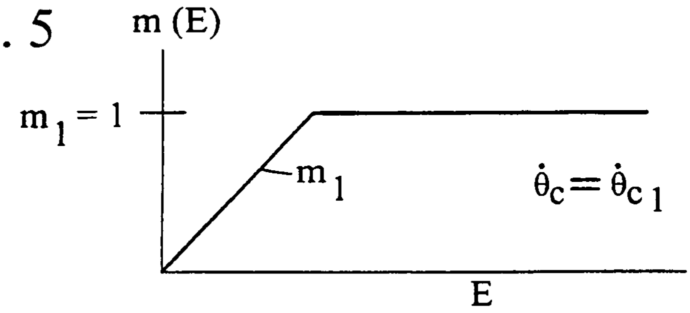


FIG. 6

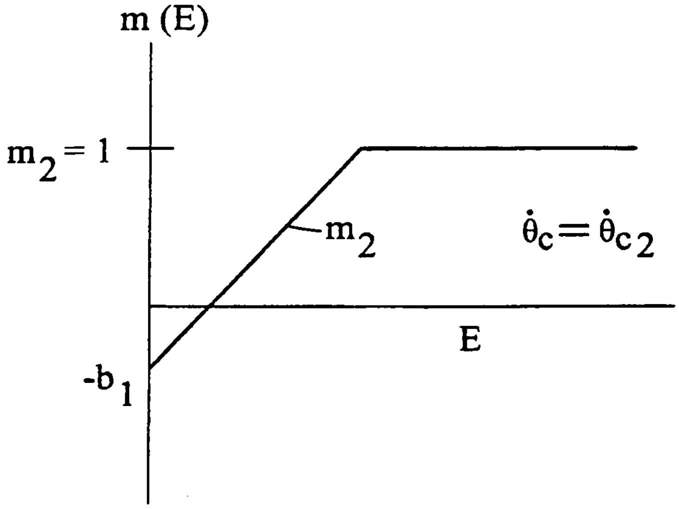


FIG. 7

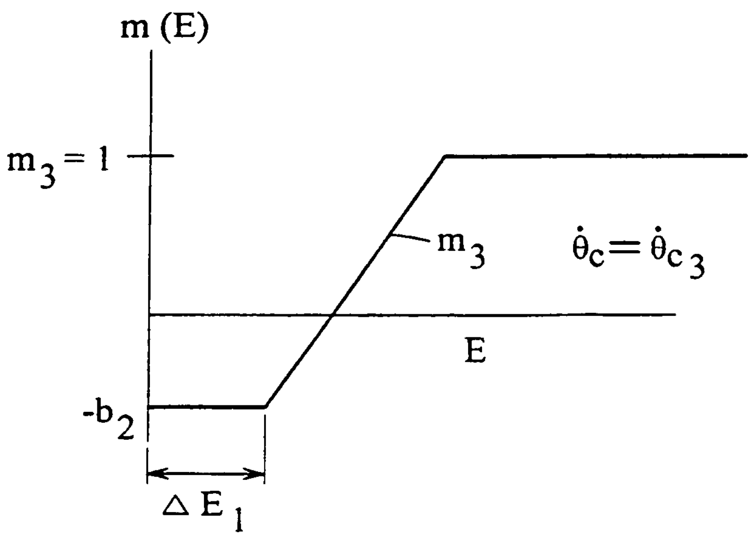

FIG. 8

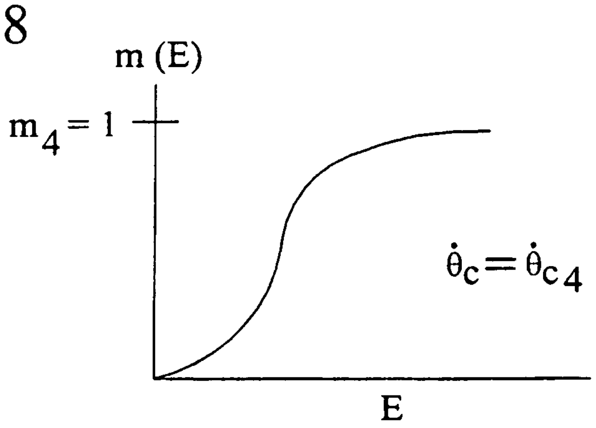


FIG. 9

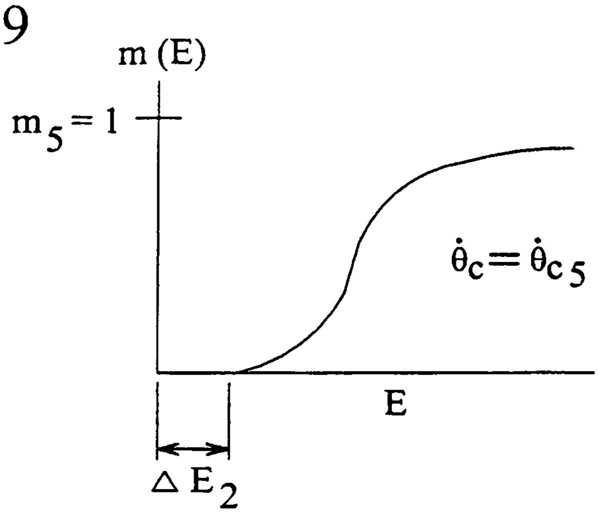


FIG. 10

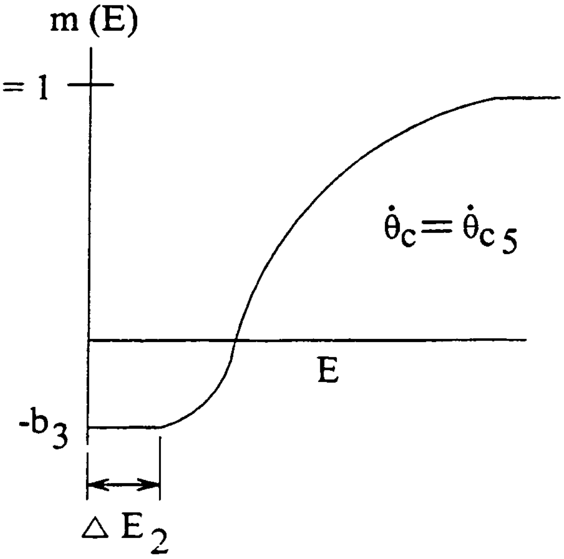

FIG. 11

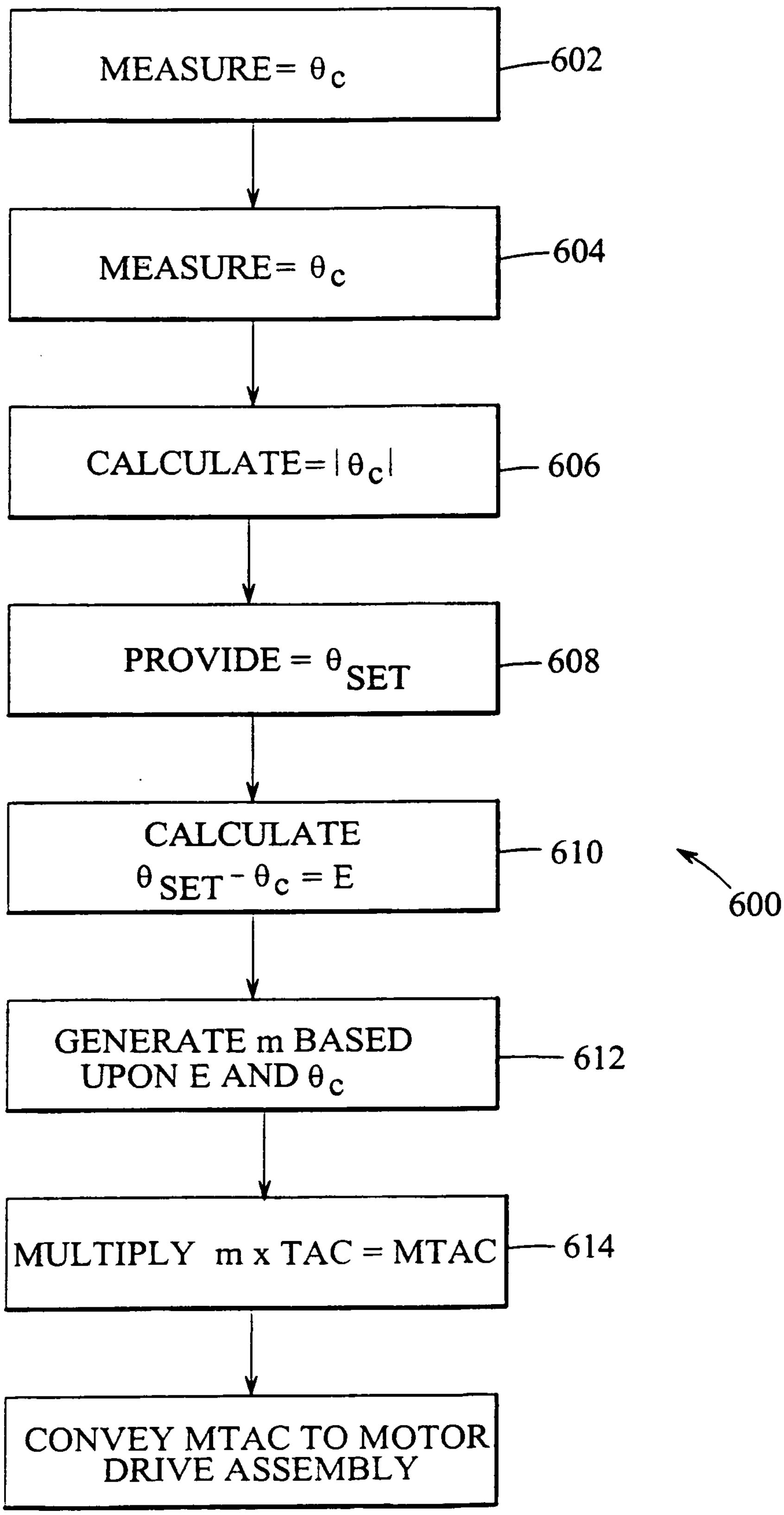
MEASURE= θc
602
MEASURE= θc
604
CALCULATE= | θc |
606
PROVIDE = θSET
608
CALCULATE
θSET - θc = E
610
600
GENERATE m BASED
UPON E AND θc
612
MULTIPLY m x TAC = MTAC
614
CONVEY MTAC TO MOTOR
DRIVE ASSEMBLY

Fig. 12

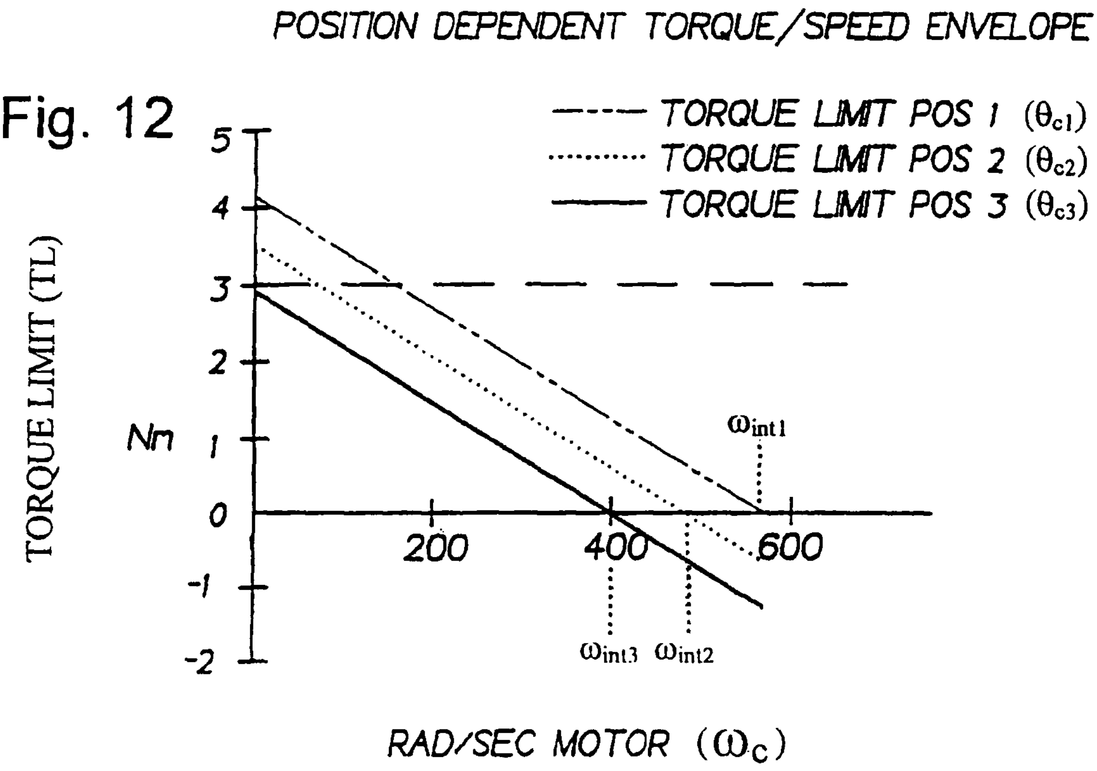
POSITION DEPENDENT TORQUE/SPEED ENVELOPE
TORQUE LIMIT POS 1 (θc1)
TORQUE LIMIT POS 2 (θc2)
TORQUE LIMIT POS 3 (θc3)
TORQUE LIMIT (TL)
Nm
5
4
3
2
1
0
-1
-2
200
400
600
ωint1
ωint3
ωint2
RAD/SEC MOTOR (ωc)

Fig. 13

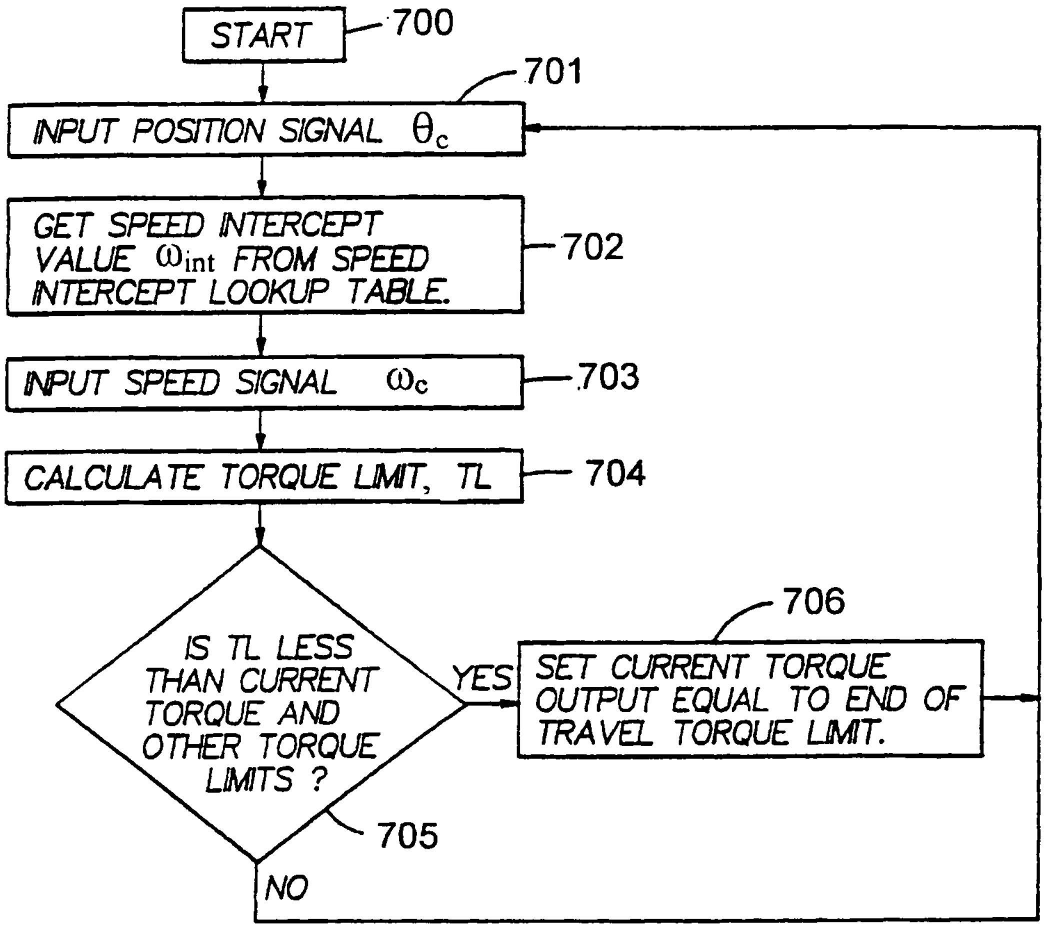
START
700
INPUT POSITION SIGNAL θc
701
GET SPEED INTERCEPT VALUE ωint FROM SPEED INTERCEPT LOOKUP TABLE.
702
INPUT SPEED SIGNAL ωc
703
CALCULATE TORQUE LIMIT, TL
704
IS TL LESS THAN CURRENT TORQUE AND OTHER TORQUE LIMITS ?
705
YES
NO
SET CURRENT TORQUE OUTPUT EQUAL TO END OF TRAVEL TORQUE LIMIT.
706

Fig. 14A

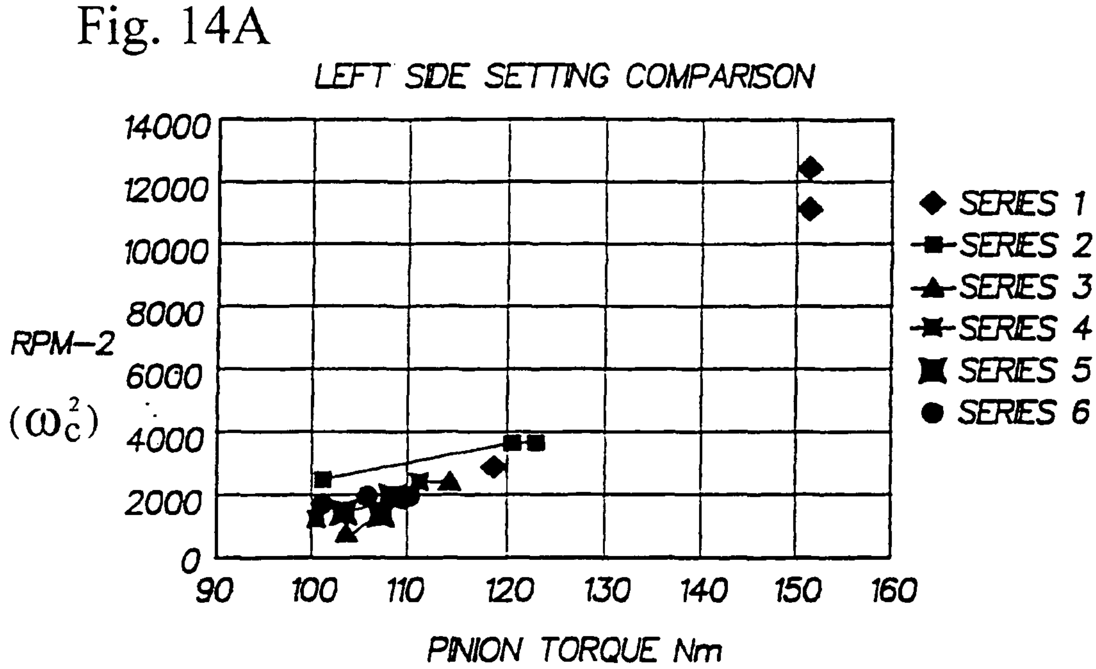


Fig. 14B

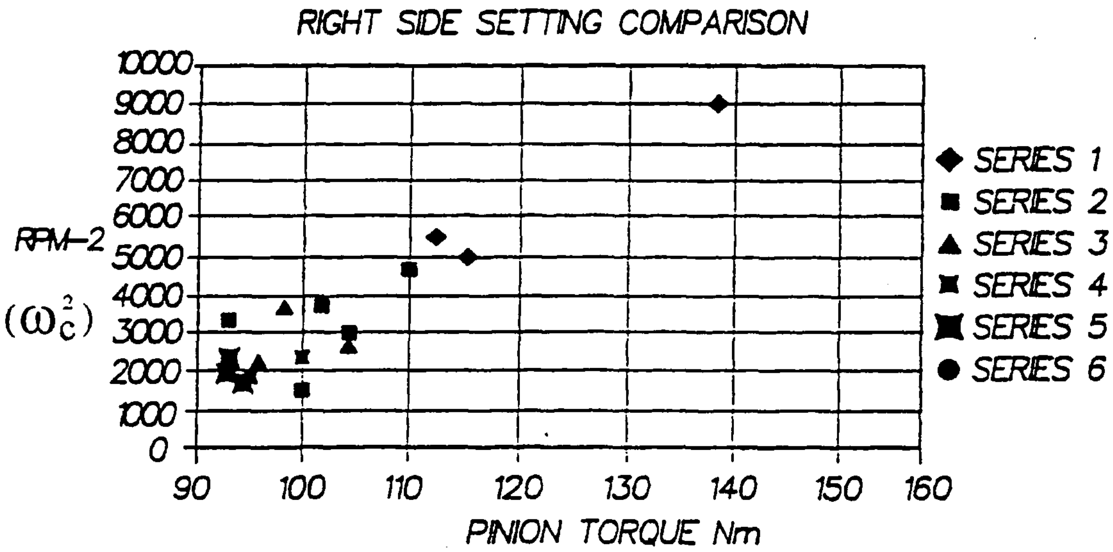

Fig. 15

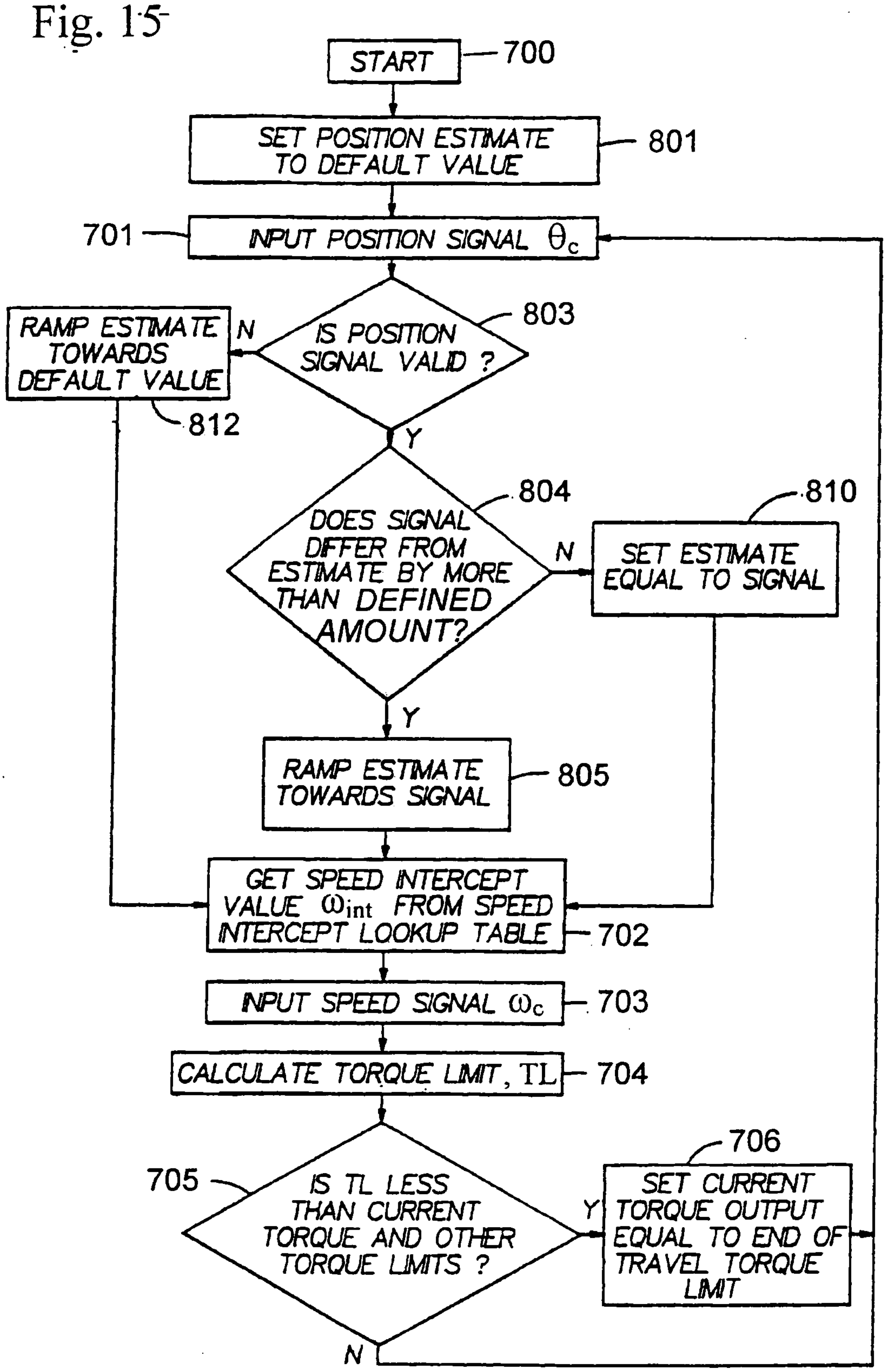
START
700
SET POSITION ESTIMATE TO DEFAULT VALUE
801
701
INPUT POSITION SIGNAL $\theta_c$
IS POSITION SIGNAL VALID ?
803
N
RAMP ESTIMATE TOWARDS DEFAULT VALUE
812
Y
DOES SIGNAL DIFFER FROM ESTIMATE BY MORE THAN DEFINED AMOUNT?
804
N
SET ESTIMATE EQUAL TO SIGNAL
810
Y
RAMP ESTIMATE TOWARDS SIGNAL
805
GET SPEED INTERCEPT VALUE $\omega_{int}$ FROM SPEED INTERCEPT LOOKUP TABLE
702
INPUT SPEED SIGNAL $\omega_c$
703
CALCULATE TORQUE LIMIT, TL
704
705
IS TL LESS THAN CURRENT TORQUE AND OTHER TORQUE LIMITS ?
Y
SET CURRENT TORQUE OUTPUT EQUAL TO END OF TRAVEL TORQUE LIMIT
706
N

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4785901 A